Europäisches Patentamt

(19) European Patent Office

Office européen des brevets

(11) Publication number: **0 139 125 B1**

## (12) EUROPEAN PATENT SPECIFICATION

(45) Date of publication of patent specification: **19.06.91** (51) Int. Cl.⁵: **G06F 11/20**

(21) Application number: **84109087.1**

(22) Date of filing: **01.08.84**

(54) Computer system including a workstation takeover control apparatus.

(30) Priority: **12.09.83 US 531114**

(43) Date of publication of application:
**02.05.85 Bulletin 85/18**

(45) Publication of the grant of the patent:
**19.06.91 Bulletin 91/25**

(84) Designated Contracting States:
**DE FR GB**

(56) References cited:
EP-A- 0 083 422        FR-A- 2 224 959
FR-A- 2 475 762        US-A- 3 991 407
US-A- 4 058 681        US-A- 4 351 023

IBM TECHNICAL DISCLOSURE BULLETIN, vol.
24, no. 9, February 1982, pages 4869-4872,
New York, US; A.P. SAWTSCHENKO et al.:
"Controller backup/data logger"

IBM TECHNICAL DISCLOSURE BULLETIN, vol.
26, no. 4, September 1983, pages 2118-2119,
New York, US; R.J. WOESSNER:
"Disconnecting terminals from a multi-drop
network without network downtime"

(73) Proprietor: **International Business Machines
Corporation
Old Orchard Road
Armonk, N.Y. 10504(US)**

(72) Inventor: **Hammer, William Elder
1006 Northern Heights Dr.
Rochester Minnesota 55904(US)**
Inventor: **Kossman, Harold Francis
1437 City View Ct.
Rochester Minnesota 55901(US)**

(74) Representative: **Savi, Camillo et al
c/o IBM Semea S.r.l. Direzione Brevetti Cir-
convallazione Idroscalo P.O. Box 137
I-20090 Segrate (Milano)(IT)**

## Description

This invention relates to an apparatus for providing high availability of workstations in a computer system and more particularly, to workstation takeover control apparatus in a high availability computer system including a primary or controlling host computer, a primary or controlling workstation controller, a plurality of workstations, a secondary host or standby computer, and a secondary or standby workstation controller.

The invention finds particular utility in a computer system which requires backup over workstations and workload of the computer system.

The prior art such as US-A-3,303,474; 3,593,302 and 3,864,670 is directed to an arrangement where a common piece of hardware monitors operation and detects errors in one of the computers and switches to the operable computer.

USA 3,964,056 describes a system comprising two central units, several groups of controlled units and peripheral units associated in pairs each pair including one peripheral unit per group of controlled units and per central unit. The peripheral units receive orders from the central units and retransmit them to the controlled units. The peripheral units of a pair are alternatively operable in a standby mode and in a control mode in response to orders from the central units.

The principal objects of the inventions are to provide the ability to attach workstations to multiple computers to provide high availability of system resources to the workstation users.

According to the invention as defined in claim 1, a secondary or standby workstation controller is connected to be polled as a workstation by the primary or controlling workstation controller in a manner to eliminate the need to change the interconnections by taking advantage of the cable through feature when the secondary workstation controller is caused to function as a primary workstation controller upon the failure of the primary workstation controller, said failure being detected by the secondary workstation controller when it has not been polled by the primary workstation controller within a predetermined period of time.

According to another feature of the invention, the primary and secondary workstation controllers are connected to the adjacent workstations in such a way that the line impedance matching resistor functions as a driver resistor when a workstation controller is in the control mode and functions as a line terminating resistor when the workstation controller is in the standby mode.

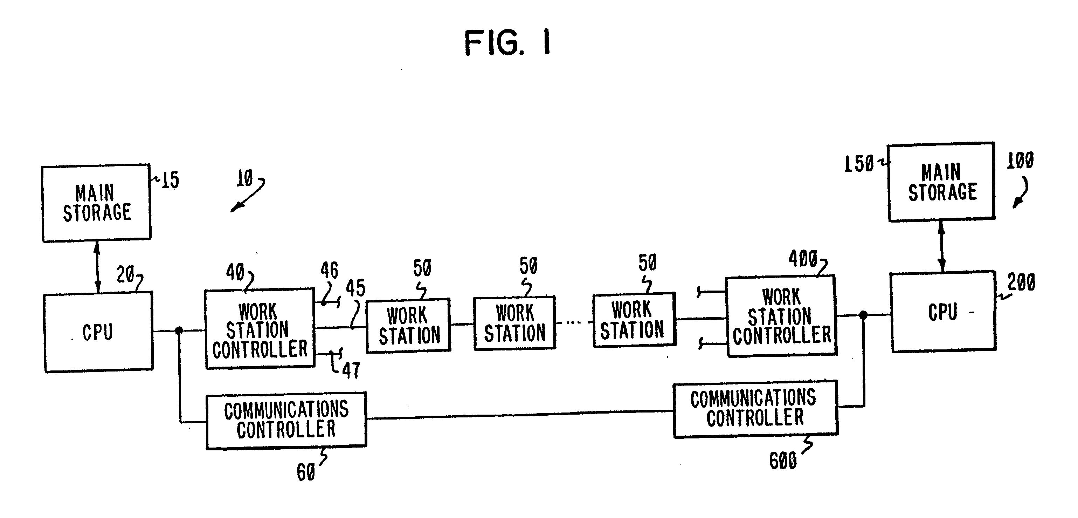

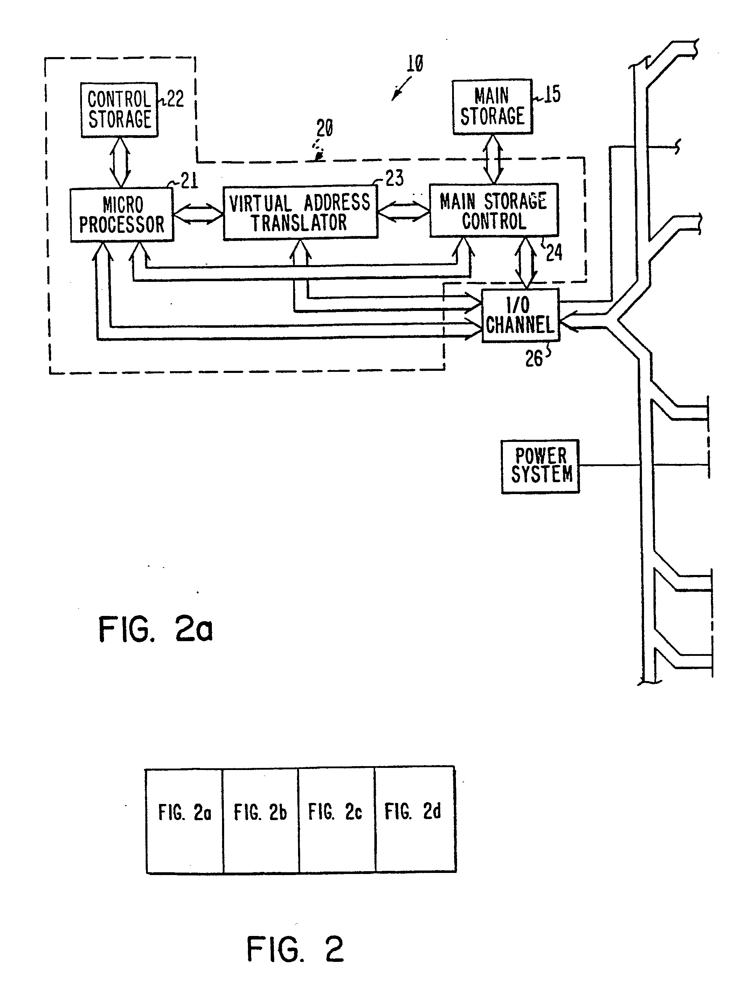

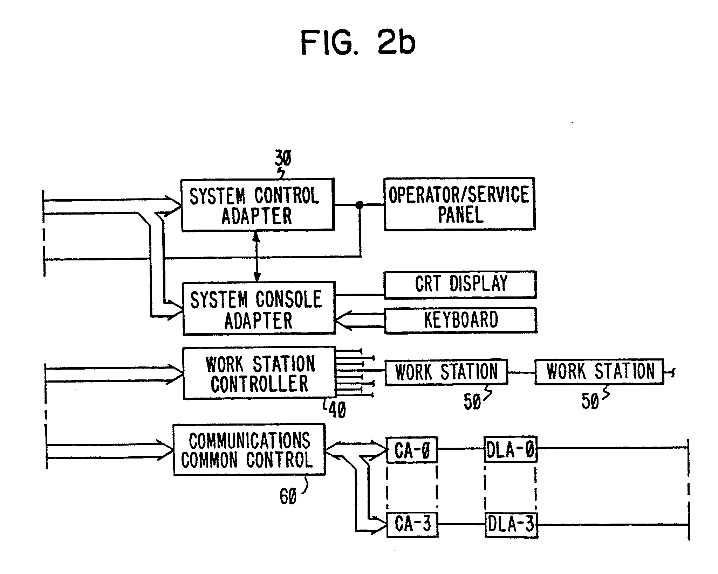

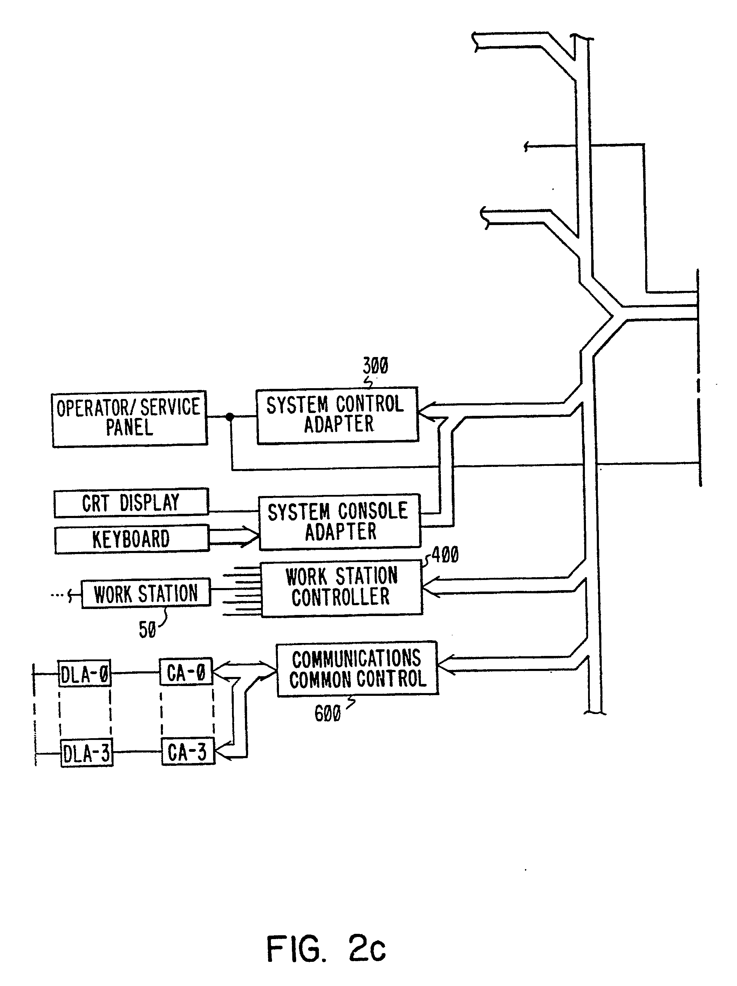

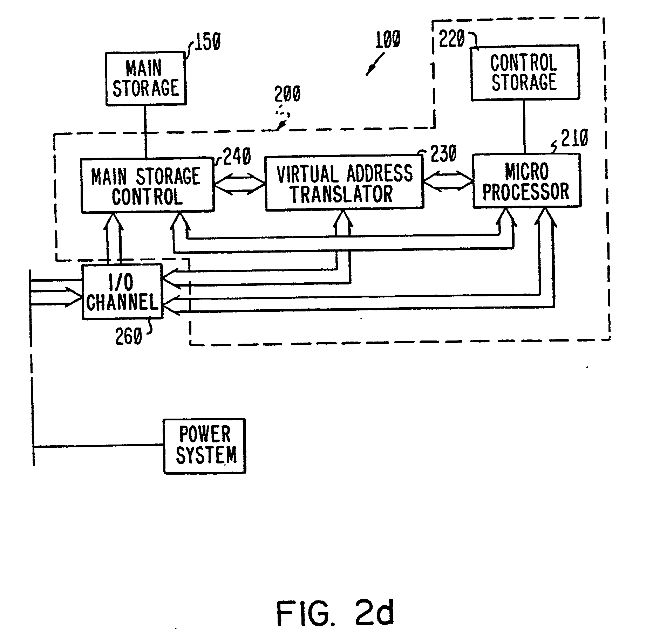

Figure 1 is a block diagram showing the invention incorporated into a computer system having a primary or controlling host computer, a primary or controlling workstation controller, a plurality of workstations, a secondary host computer and a secondary or standby workstation controller with a communications link between the primary and secondary computers. Figures 2a, 2b, 2c and 2d taken together as in Figure 2, are a more detailed block diagram of the computer system of Figure 1.

Figure 2 is a diagram illustrating the arrangement of Figures 2a, 2b, 2c and 2d.

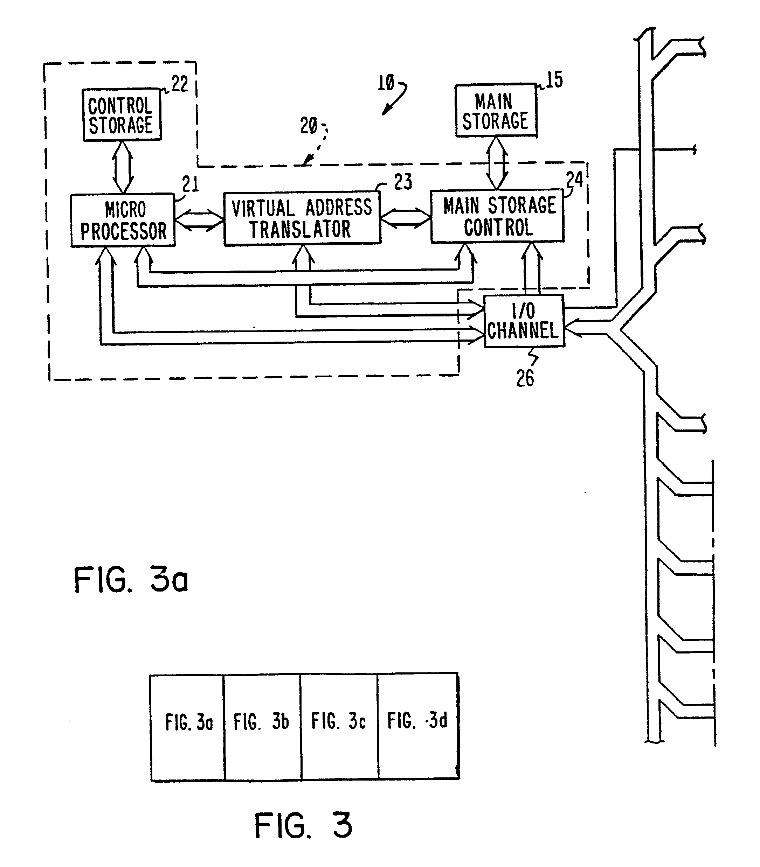

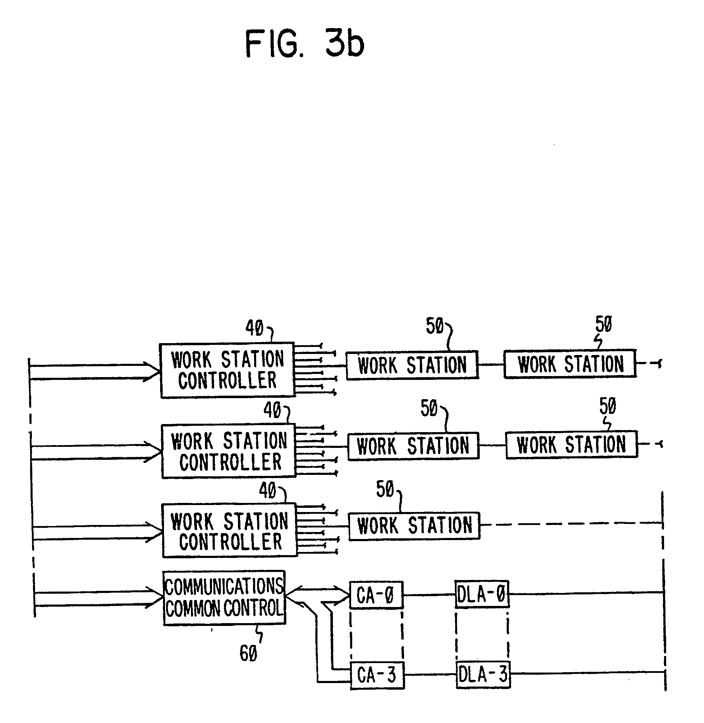

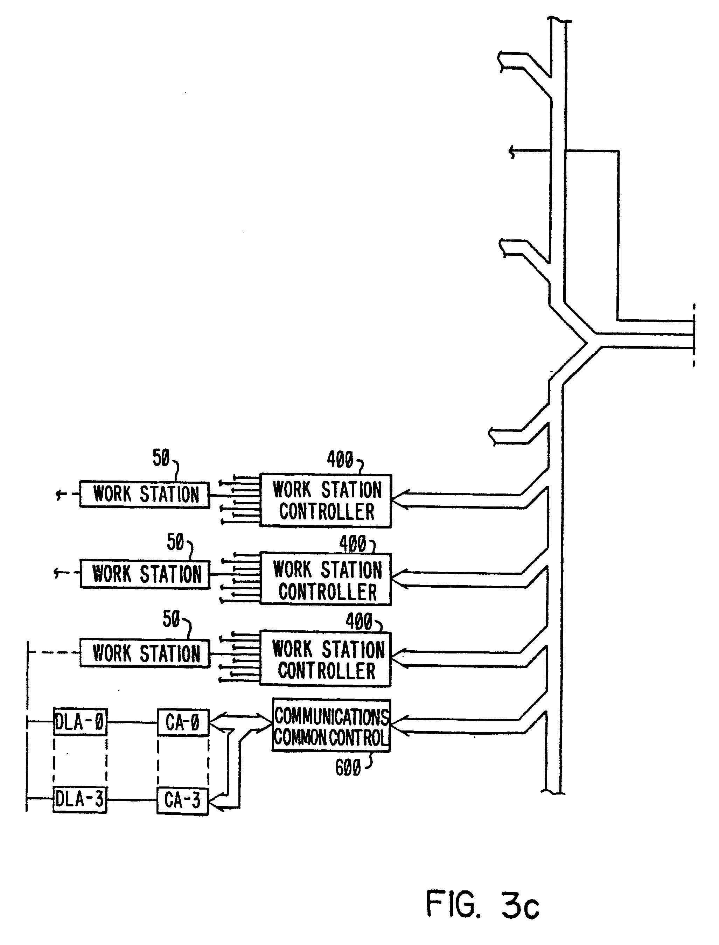

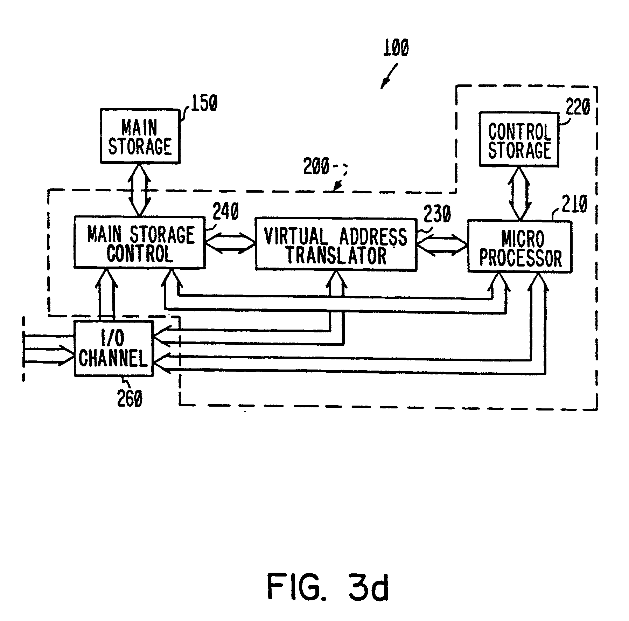

Figures 3a, 3b, 3c and 3d, taken together as in Figure 3, are a schematic block diagram of a computer system where each computer of the system functions as both a primary and secondary host and has both primary and secondary workstation controllers connected to it as well as independent workstation controllers.

Figure 3 is a schematic diagram illustrating the arrangement of Figures 3a, 3b, 3c and 3d.

Figure 4 is a schematic block diagram showing the invention incorporated in a computer system including four computers where one of the computers functions as a primary host to more than one secondary computer.

Figures 5a, 5b and 5c, taken together as in Figure 5, are a schematic block diagram illustrating the data flow of a workstation controller.

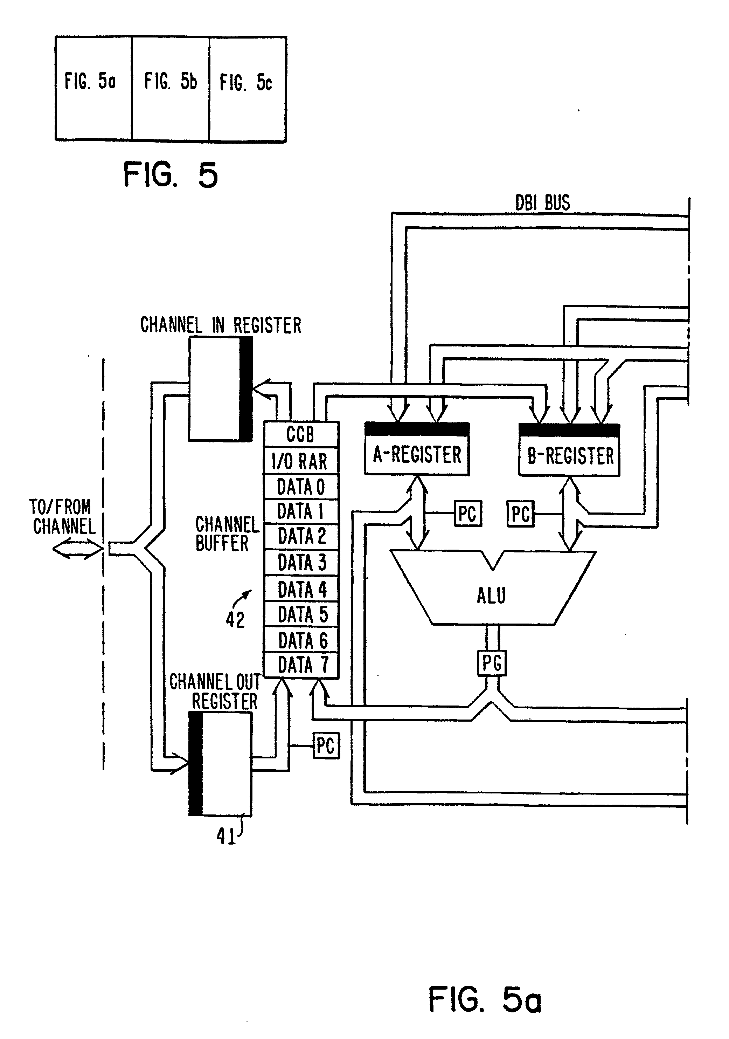

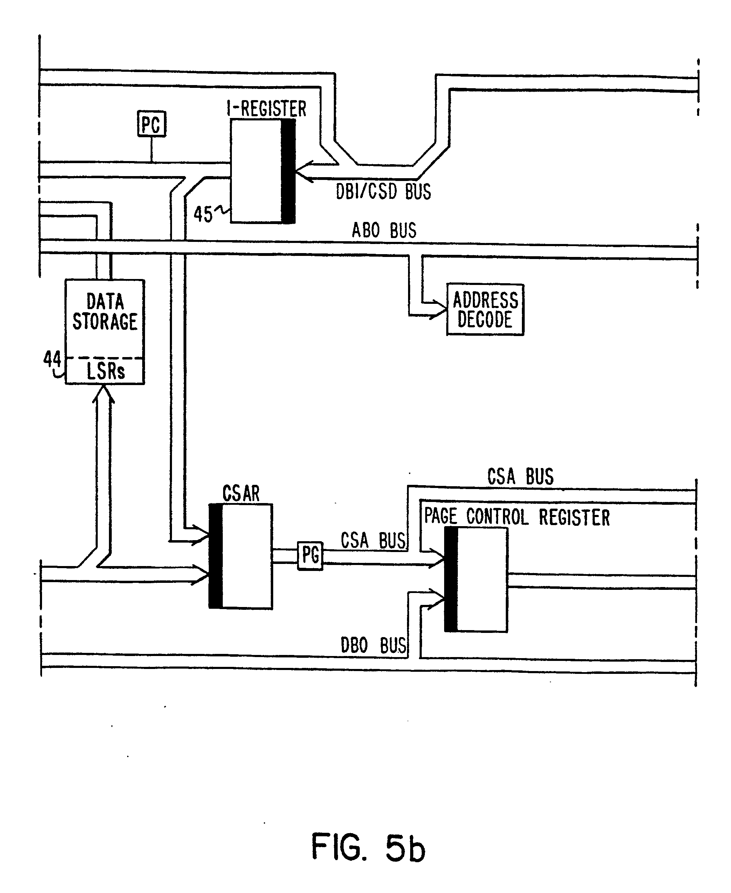

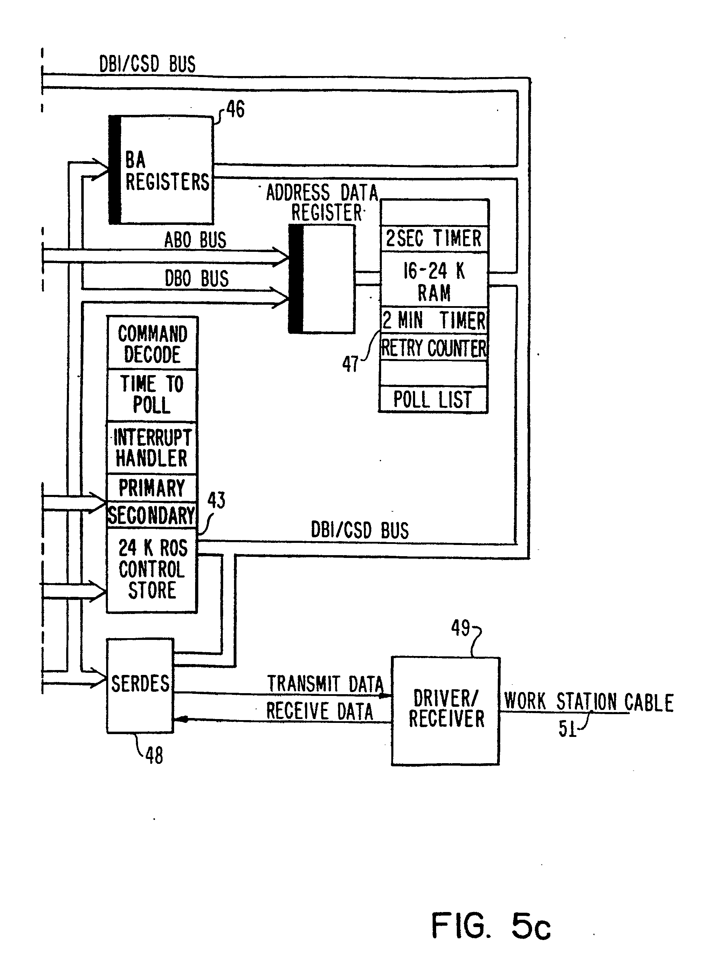

Figure 5 shows the arrangement of Figures 5a, 5b and 5c.

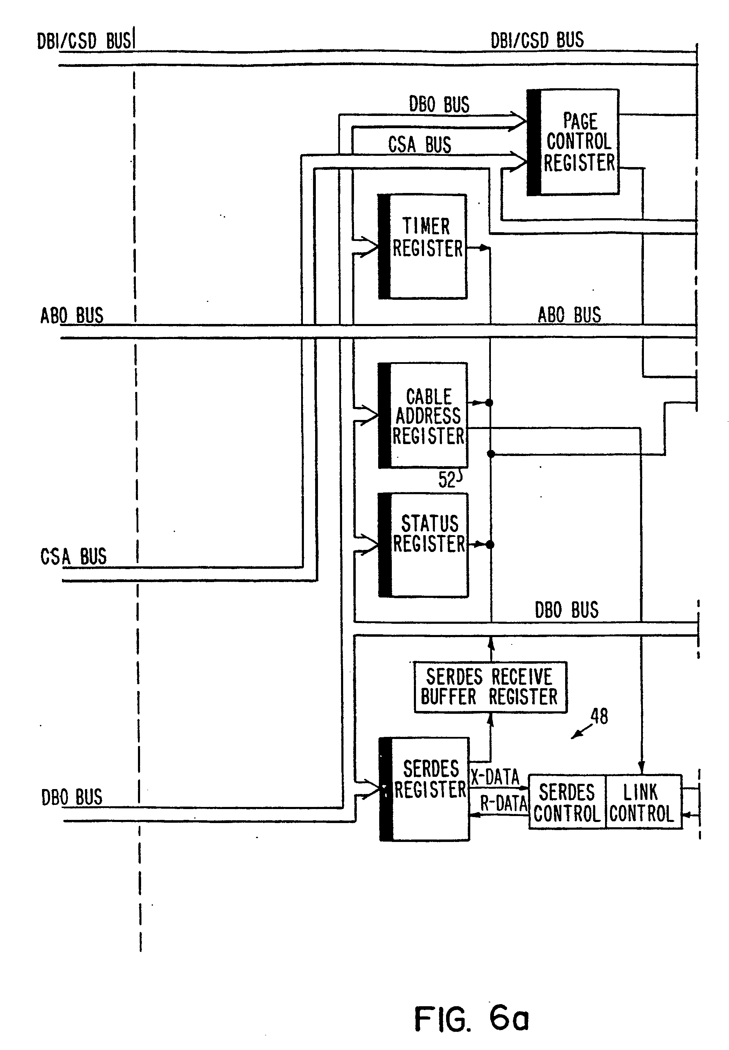

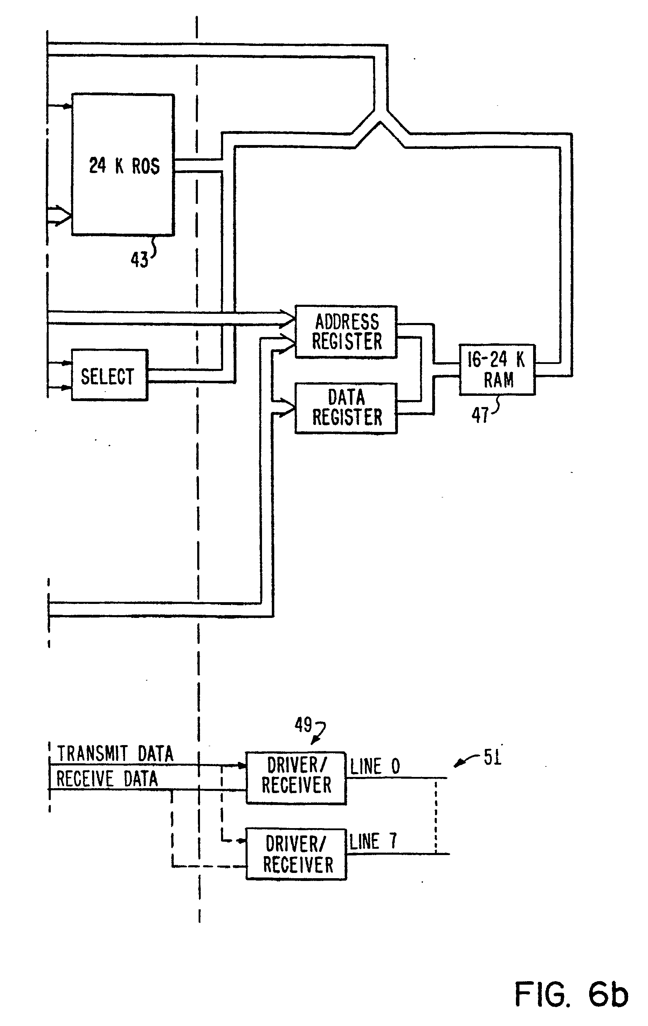

Figures 6a and 6b, with Figure 6a disposed to the left of Figure 6b, taken together, are a schematic block diagram showing a portion of the workstation controller in greater detail.

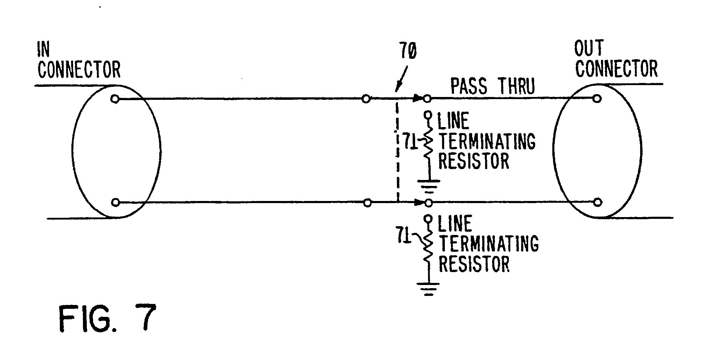

Figure 7 is a schematic diagram of a line pass-through connection.

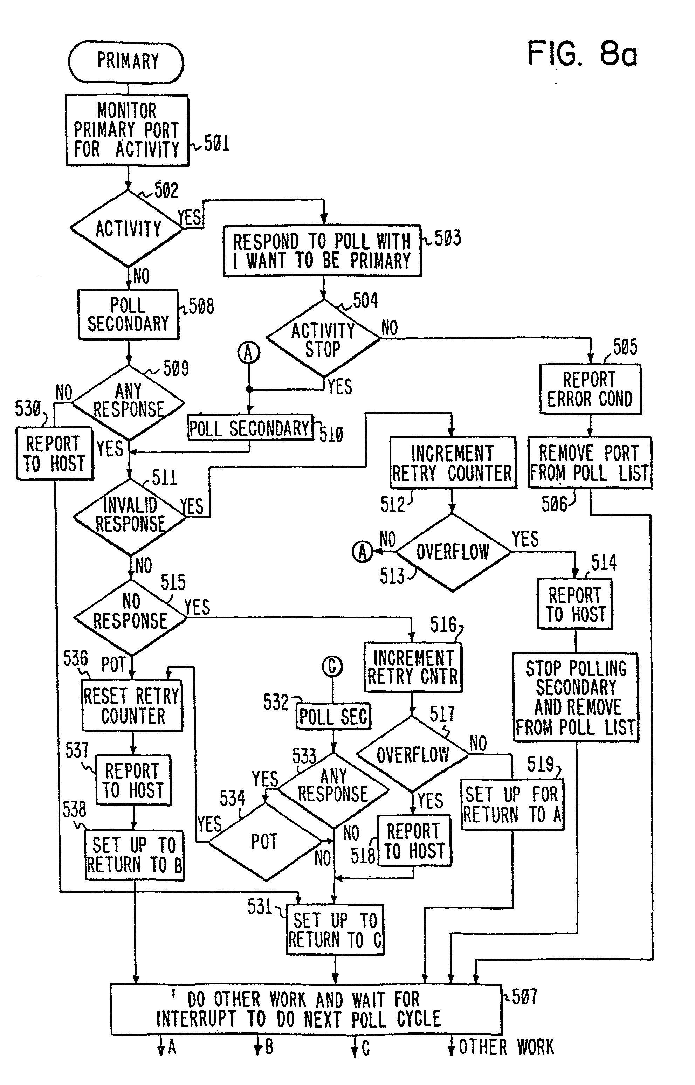

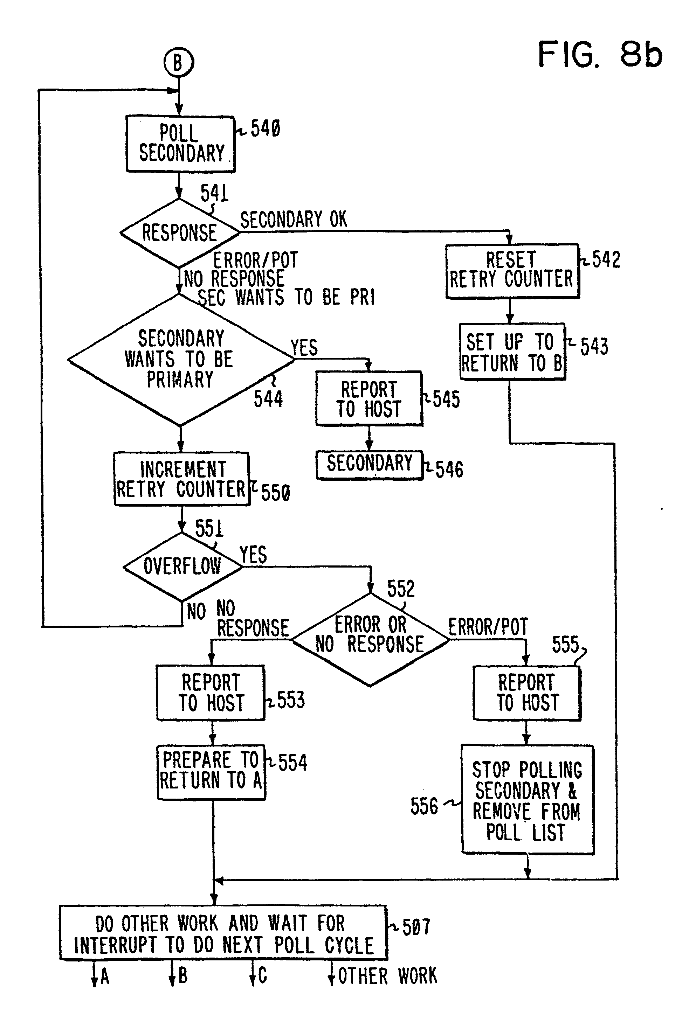

Figures 8a and 8b with Figure 8a disposed to the left of Figure 8b, taken together are a flow diagram of the operations performed by a primary workstation controller.

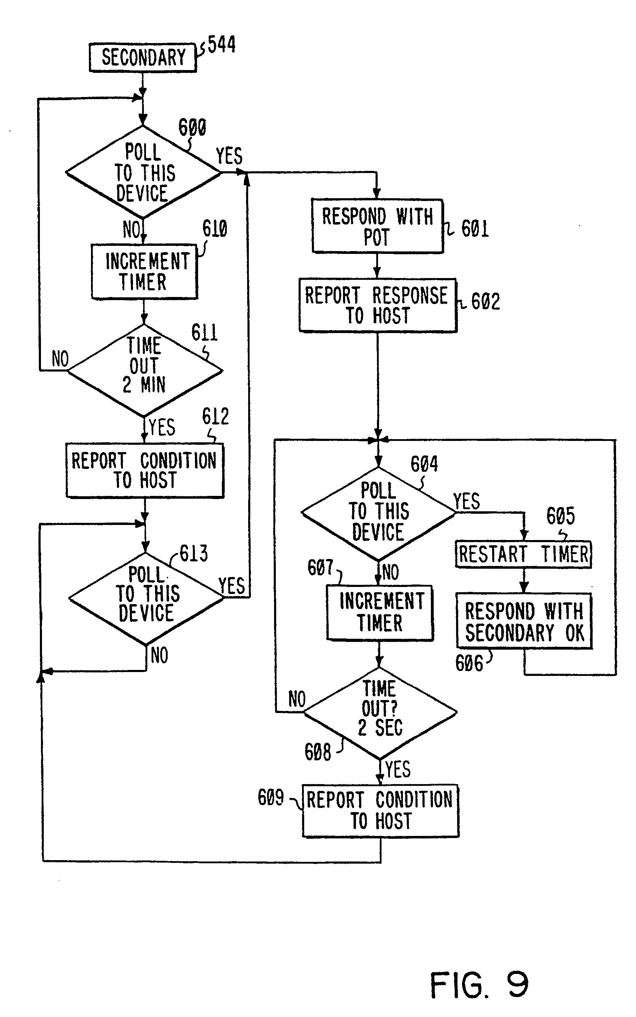

Figure 9 is a flow diagram of the operations performed by a secondary workstation controller.

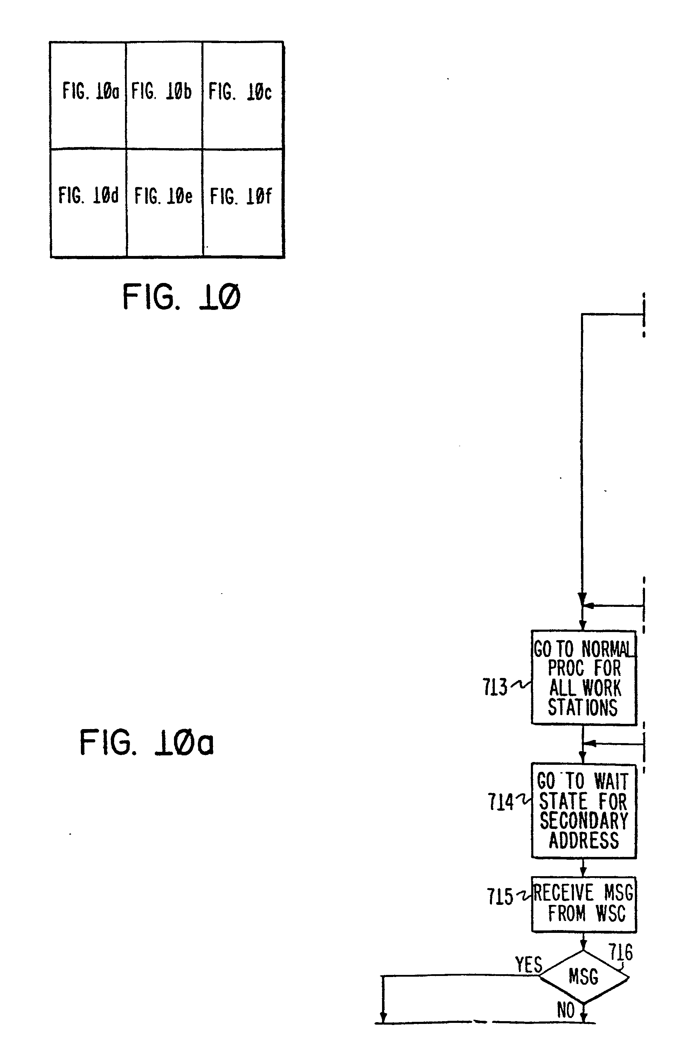

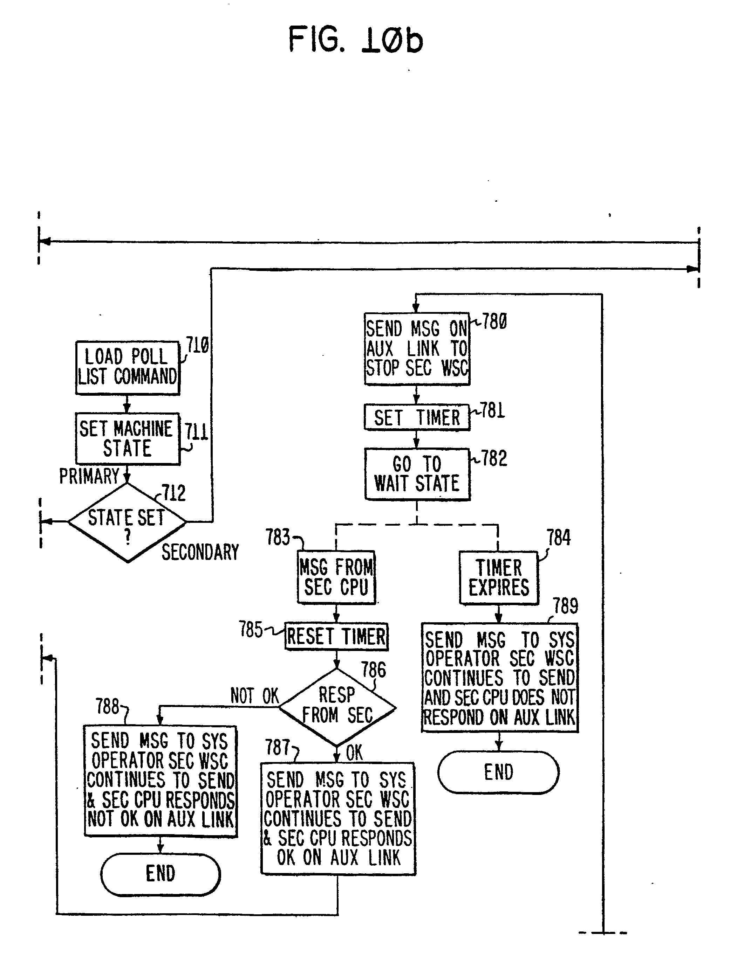

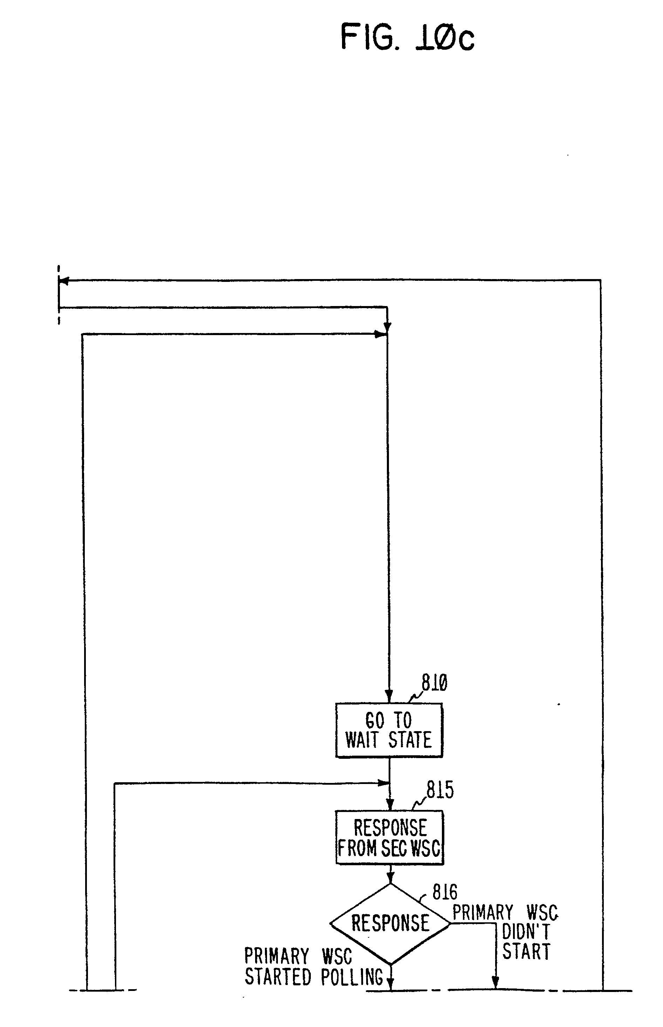

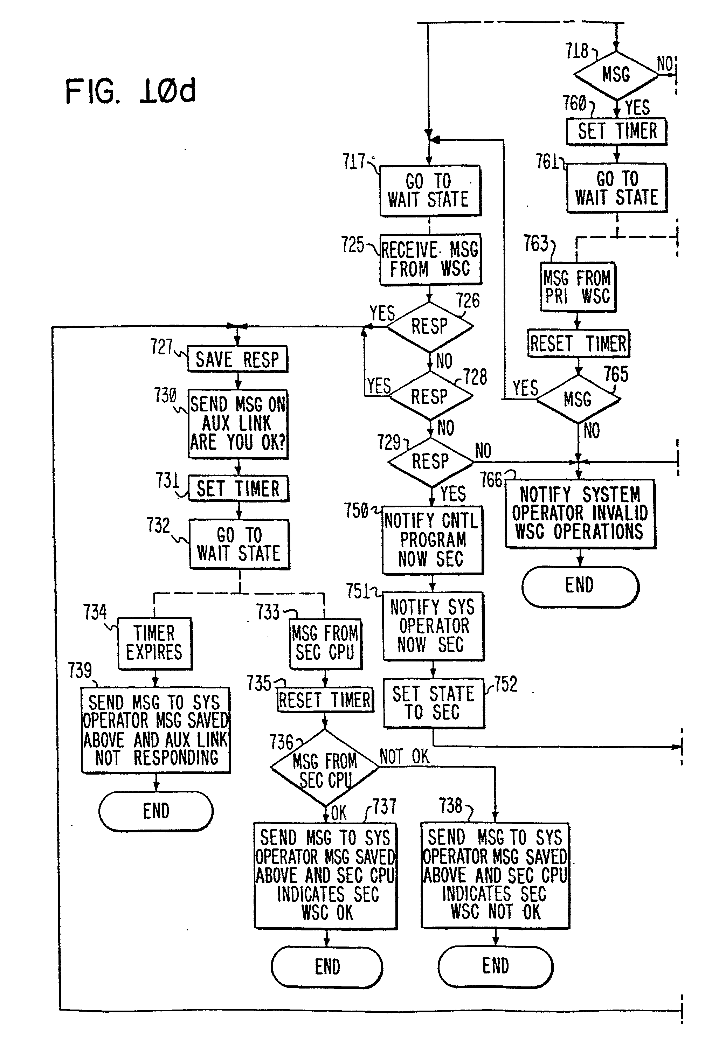

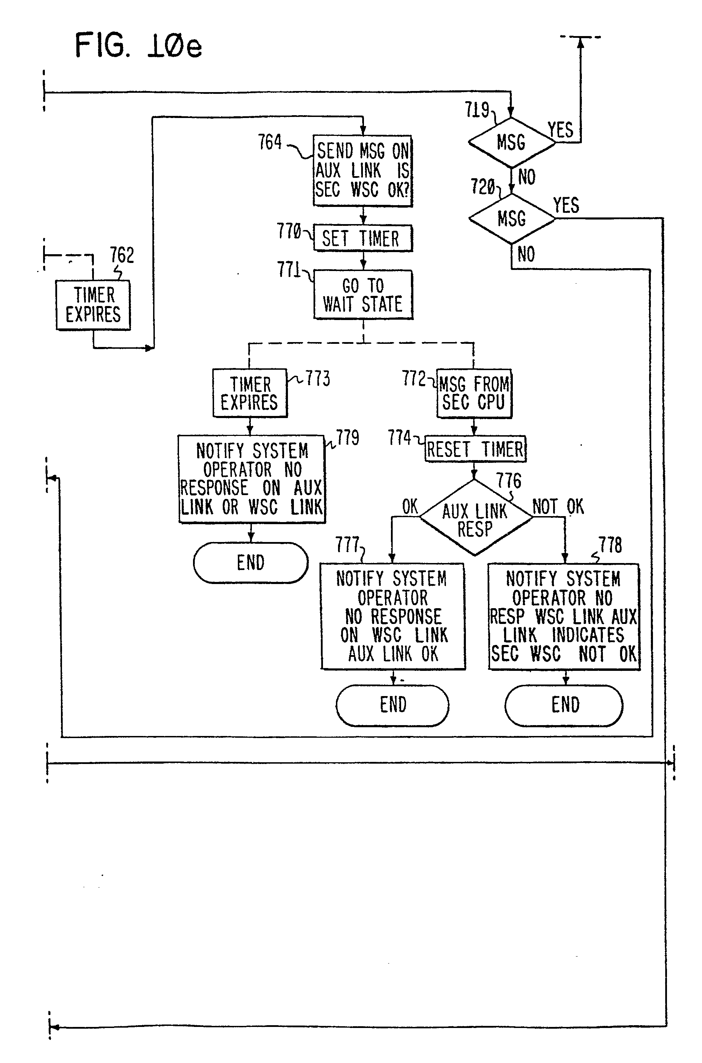

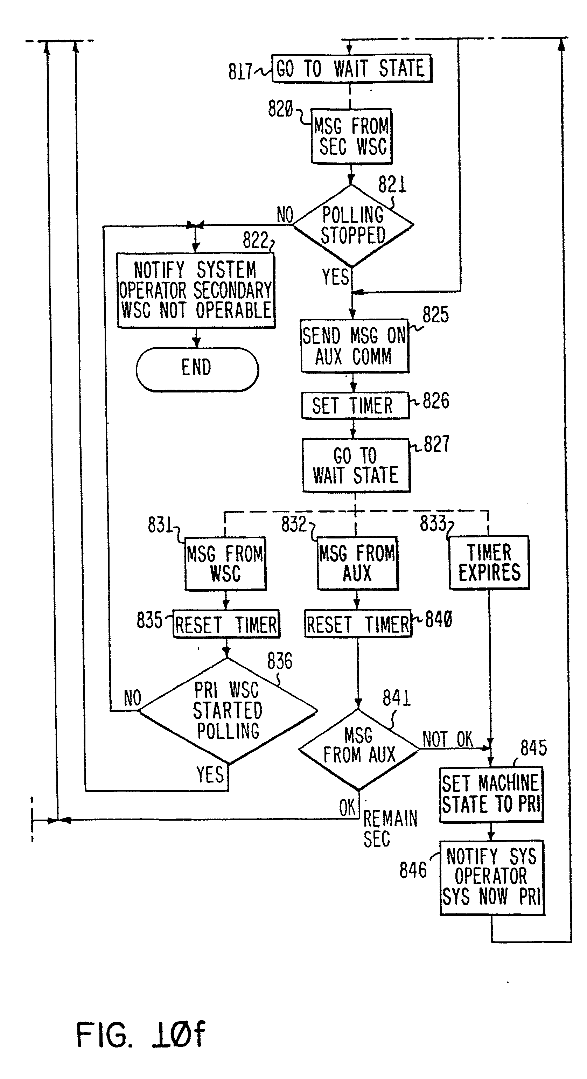

Figures 10a, 10b, 10c, 10d, 10e and 10f, taken together as in Figure 10, are a flow diagram of the operations performed by primary and secondary host central processing units; and

Figure 10 shows the arrangement of Figures 10a, 10b, 10c, 10d, 10e and 10f.

With reference to the drawings and particularly to Figure 1, the invention is illustrated by way of example as being incorporated in a system where workstations 50 are attached to multiple computers 10 and 100. Computer 10 in this example consists of main storage 15 and central processing unit (CPU) 20. Similarly computer 100 consists of main storage 150 and central processing unit (CPU) 200. Whether or not computers 10 and 100 have separate storages 15 and 150 respectively is immaterial to the present invention, and the computers 10 and 100 could share a common storage in a well known tightly coupled arrangement.

Workstation controller 40 is attached to the CPU 20, and workstation controller 400 is attached to CPU 200. The computer systems 10 and 100 communicate with each other via communications controllers 60 and 600. In this example workstation controller 40 is designated as the primary workstation controller for controlling workstations 50, and workstation controller 400 is the standby or secondary workstation controller. Computer systems 10 and 100 are designated as primary host and secondary host computers respectively relative to workstations 50.

The workstation controllers 40 and 400 receive poll lists in a conventional manner. The host systems 10 and 100 send commands to the workstation controllers 40 and 400 for loading the poll list. The workstation controllers 40 and 400 then execute the commands by retrieving the poll lists from main storage 15 and 150 respectively. The workstation controllers 40 and 400 store the poll lists in their storages which will be described in greater detail in connection with Figures 5a, 5b and 5c. The primary and secondary modes are set in accordance with the states of control bits in the load poll list command. Except for these control bits, the load poll list commands are identical.

As the workstation controllers 40 and 400 complete the execution of the load poll list command they will start to poll the workstations 50 and in this instance only the active workstation controller, i.e. workstation controller 40, will be polling the workstations 50 and additionally will be polling workstation controller 400 in the same manner that it polls the workstations 50.

The workstation controller 400 could have been active and thus workstation controller 40 after receiving or retrieving the poll list from the host processor 20, it monitors port 45 of Figure 1 for activity. Normally there should be no activity or signals on the port 45 at this time. If there are signals on port 45 they would be indicative that either workstation controller 400 is operating as an active workstation controller or that one of the workstations 50 is inoperative.

The monitoring of port 45 by workstation controller 40 is indicated by block 501 of Figure 8a. The test for activity by workstation controller 40 is indicated by block 502. If there is activity, workstation controller 40 is in essence being polled by workstation controller 400, and it responds to the poll with a response indicating that workstation 40 wants to be the primary workstation. This is indicated by block 503. Workstation controller 40 then continues to monitor port 45 to see if activity has stopped, i.e. determines if workstation controller 400 went into a standby or secondary mode as determined by block 504. If workstation controller 400 did not go into the standby mode and there is still activity at port 45, workstation controller 40 reports an error condition to its host CPU 20 indicating that the workstation controller 400 is keeping the port busy as indicated by block 505. Workstation controller 40 can remove port 45 from its poll list and work with ports 46 and 47, for example, which would be connected to other workstations not shown. This action is indicated by block 506.

If the activity had stopped as indicated by block 504, then workstation controller 40 polls the workstation controller 400 as a secondary or standby workstation controller as indicated by block 510.

Workstation controller 40 then looks for a response from workstation controller 400 as indicated by block 511. This function is also reached when block 502 determines that there was no activity at all at port 45. When that condition exists workstation controller 40 polls workstation controller 400 as indicated by block 508. If there is a response from workstation controller 400, the test for a response being indicated by block 509, then the validity of the response is tested by block 511. If there were no response then workstation controller 40 reports that fact to host CPU 20 as indicated by block 530. Workstation controller 40 in this instance sends a message to CPU 20 indicating that the secondary or standby workstation controller 400 does not respond to polls. This could be a normal condition, i.e. workstation controller 400 has not been switched to secondary or standby status or is in the process of doing so.

Block 531 sets up for return to block 532, i.e. return to C. The return to block 532 is determined by workstation controller 40 which can be doing other work such as polling workstations 50 or polling ports 46 and 47. Block 532 is indicative that workstation controller 40 is polling standby workstation controller 400 and block 533 checks for a response from workstation controller 400. If there is no response again from workstation 400, block 531 sets up a return for polling by block 532. If there is a response from workstation controller 400, block 534 checks to determine if the response is a power on transition (POT) response which indicates that the secondary or standby workstation controller 400 is responding to the first poll that the workstation controller 400 has detected. If the response is other than a power on transition response, the response could be indicative of a line noise condition, then the operation switches to block 531.

If the response is a power on transition response then workstation controller 40 resets its retry counter as indicated by block 536. Workstation controller 40 then sends a message to host CPU 20 indicating to CPU 20 that the secondary or standby workstation controller 400 responded to a poll. This is indicated by block 537. Workstation controller 40 has now established that there is a good communication link with secondary workstation controller 400, and it then sets up a return to point B of Figure 8b as indicated by block 538, the return being via block 507. Workstation controller 40 can now poll the secondary workstation controller 400 as a functioning workstation, and this occurs whenever workstation controller 40 returns to point B.

If there has been a response from the secondary workstation controller 400 as determined by block 509, Figure 8a, then block 511 would check to determine if the response were valid. If there were an invalid response at this time from workstation controller 400, block 512 would increment the retry counter in workstation controller 40. The retry counter is a programmable counter in the workstation controller 40, and it is programmed for a predetermined number of retries. Block 513 tests for an overflow from the retry counter, and if there is no overflow the operation switches back to block 510 for another poll of the secondary workstation controller 400. If there is an overflow of the retry counter then workstation controller 40 reports this condition to CPU 20 as indicated by block 514. The workstation controller 40 reports that the secondary workstation controller's response to polls is invalid after the predetermined number of retries. Workstation controller 40 stops polling workstation controller 400 and removes it from the poll list.

If block 511 determines that the response is valid or that there is no invalid response, then because block 511 can be entered from two sources, block 515 checks for a response condition. If there is no response as detected by block 515 then the retry counter in workstation controller 40 is incremented as indicated by block 516. Block 517 checks for an overflow condition. If there is an overflow of the retry counter the workstation controller 40 reports it to host CPU 20 as indicated by block 518, and the message in this instance is that the secondary workstation controller 400 doesn't respond to polls. Workstation controller 40 then sets up a return to point C. If the retry counter did not overflow as detected by block 517, workstation controller 40 would set up a return to A as indicated by block 519.

The invalid conditions and the looping for poll responses have been described. When workstation controller 40 returns to point B, it will poll the secondary workstation controller 400 as indicated by block 540 of Figure 8b. The function of polling the secondary workstation controller 400 at this time, i.e. after it has been determined that secondary or standby workstation controller 400 has come back with a power on transition response, is to provide a means for determining if the workstation controller 40 has developed a condition whereby standby workstation controller 400 should take over. Block 541 tests to see if the secondary or standby workstation controller 400 is responding properly, i.e. the secondary workstation controller 400 provides a link level poll response indicating that it is okay. The workstation controller 40 in response to receiving a secondary okay response resets the error or retry counter as indicated by block 542. Workstation controller 40 then sets up a return to B as indicated by block 543, and the operation switches to block 507 which is repeated on Figure 8b for clarity.

If block 541 detects an error condition which would be a response other than secondary okay, then workstation controller 40 checks to determine if the secondary workstation controller 400 wants to be a primary workstation controller. This check is made by block 544. If workstation controller 40 detects that the response is one where the secondary workstation controller 400 wants to be a primary workstation controller then workstation controller 40 reports a message to the host CPU 20 indicating that fact as indicated by block 545. Although the workstation controller 40 reports this message to the host CPU 20, workstation controller 40 enters the secondary mode as indicated by block 546. This secondary mode is set forth in Figure 9.

It should be understood that the operation in the secondary or standby workstation controller 400 is taking place at the same time that workstation controller 40 is operating. In this particular example workstations 40 and 400 are identical in the sense that both can be either a primary or secondary workstation controller. Thus the secondary or standby workstation controller 400 is operating to determine if it has been polled. Block 600, Figure 9, tests for the poll, and if a poll has been received, the secondary workstation controller 400 responds with a power on transition (POT) as indicated by block 601. Workstation controller 400 also responds to its host processor 200 with a message that the primary workstation controller 40 has started polling. This is indicated by block 602. The secondary workstation controller 400 then starts a two second timer. The function of the timer is to insure that the secondary workstation controller is polled every two seconds. By this arrangement a check is made to determine if the primary workstation controller 40 is still operable.

Block 604 looks for a poll, and if one is received the secondary workstation controller 400 restarts the two second timer as indicated by block 605. The secondary workstation controller 400 then responds to the primary workstation controller 40 with a message indicating that the secondary workstation controller 400 is okay as indicated by block 606.

If block 604 determines that there was no poll, the two second timer is incremented as indicated by block 607 and then a check is made to see if there is a two second timeout as indicated by block 608. If there is no two second timeout the operation loops back to block 604 but if there is one, then the secondary workstation controller 400 reports the condition to host processor 200 as indicated by block 609. The secondary workstation controller 400 would report that the primary workstation controller 40 stopped polling.

When the workstation controller 400 reports that the primary workstation controller 40 has stopped polling, the workstation controller 400 continues to look for a poll as indicated by block 613. One of two conditions could exist. The primary workstation controller 40 could start polling again, and if so the operation switches to block 601. If the primary workstation controller 40 does not poll, then the secondary workstation controller 400 remains in the loop looking for a poll and will stay in this loop until some other action is taken. The CPU 200 would make the workstation controller 400 a primary workstation controller where the workstation controller 400 would start its operation indicated by block 501 of Figure 8a.

It should be noted that when the secondary workstation controller 400 was looking for a poll, if none occurred, it incremented a two minute timer as indicated by block 610, and then a check is made to determine if there is a two minute timeout as indicated by block 611. If there is no two minute timeout the operation switches back to block 600. If there is a two minute timeout the condition is reported to the host CPU 200. The workstation controller 400 reports that the primary workstation controller 40 did not start polling within two minutes.

It should be recognized that the primary workstation controller 40 can switch to a secondary workstation controller in response to a message received from the secondary workstation controller 400 indicating that it wants to be a primary workstation controller. This would occur for example when CPU 200 communicates with CPU 20 via the communications controllers 600 and 60 and gets no response from CPU 20. If there is a problem with CPU 20 it is unable to switch workstation controller 40 from a primary to a secondary workstation controller. Thus the switching is effected by CPU 200 indicating to workstation controller 400 that it should become a primary workstation controller. Workstation controller 400 then sends the appropriate message to workstation controller 40 indicating that it wants to be a primary workstation controller.

When block 544 of Figure 8b checks to see if the response was that the secondary workstation controller 400 wants to be a primary workstation controller, and if the response is negative, the workstation controller 40 increments the retry counter as indicated by block 550. Block 551 checks to see if the retry counter has overflowed, and if it has not the operation switches back to block 540. If the retry counter has overflowed block 552 checks for an error or no response. If the condition is no response the workstation controller 40 reports that the secondary workstation controller 400 has stopped responding to polls. The workstation controller 40 then prepares a return to point A in Figure 8a. If there is an error the workstation controller 40 reports to the CPU 20 that the secondary workstation controller 400 response to the polls is invalid after a predetermined number of retries. This reporting is indicated by block 555. The workstation controller 40 then stops polling the secondary workstation controller 400 and removes it from the poll list as indicated by block 556. The workstation controller 40 then switches to block 507 and can do other work, i.e. continue polling workstations 50 but not workstation controller 400.

The processors 20 and 200 each have the capability of performing the functions set forth in the flow diagram of Figure 10. Processors 20 and 200 issue the load poll list command to the respective workstation controllers 40 and 400 as indicated by block 710 of Figure 10b. Thereafter, the processors 20 and 200 set a machine state corresponding to the designations of the workstation controllers 40 and 400 as indicated by block 711. In this example CPU 20 would set the machine state to primary and CPU 200 would set the state to secondary. The next action would be to test the state as indicated by block 712.

When the state is set to primary the next action is to proceed to normal processing for all workstations as indicated by block 713. The action for the secondary state is to go to a wait state as indicated by block 810 of Figure 10c. Thus assuming processor 20 has set itself to the primary state it would then go to a wait state for this function. The processor 20 of course would be doing other work while this function is in the wait state. Processor 20 is taken out of the wait state for this function when it is passed the address of the secondary workstation controller 400 by the workstation controller 40 where this action is indicated by block 714. With this function out of the wait state the next action is to receive messages from the workstation controller 40 as indicated by block 715.

Block 716 tests for the type of message sent by the workstation controller 40 and in particular tests to see if the message is to the effect that the secondary workstation controller 400 started responding to polls with a power on transition (POT) response. If that is the message then the function again goes to the wait state as indicated by block 717 of Figure 10d. Otherwise a test is made by block 718, Figure 10d, to determine if the message is one where the secondary workstation controller 400 did not respond to polls from the workstation controller 40. If the message is that the secondary workstation controller 400 did not respond to polls from the primary workstation controller 40 then the processor 20 sets a three minute programmable timer. If the message was not of that type then another test is made as indicated by block 719, Figure 10e, to determine if the message sent to CPU 20 by workstation controller 40 is to the effect that the secondary workstation controller 400 is keeping the port 45 busy. If that is the message then processor 20 performs a function whereby it sends a message via its communications controller 60 and the communication controller 600 to CPU 200 requesting that CPU 200 issue a command to workstation controller 400 for that workstation controller to stop operating. If the message is not of that type then the CPU 20 makes another test as indicated by block 720, Figure 10e, to determine if the message was to the effect that the secondary workstation controller's response to polls is invalid after a predetermined number of retries.

If the message detected by block 716, Figure 10a, were to the effect that the secondary workstation controller 400 started responding to polls with the power on transition response, then the processor 20 went into a wait state, block 717, Figure 10d, waiting to receive a message from the workstation controller 40 as indicated by block 725. Of course, as previously explained processor 20 does other work when the function it is performing goes to the wait state of block 717. Also as previously indicated the function comes out of the wait state when processor 20 receives from workstation controller 40 the address of workstation controller 400.

When the processor 20 goes out of the wait state for that function it looks for a message from workstation controller 40. Block 726 tests to see if the message is of the type where the secondary workstation controller 400 stopped responding to polls from the primary workstation controller 40. If it is so processor 20 saves the response as indicated by block 727. If it is not then block 728 tests to see if the message is of the type where the secondary workstation controller's response to polls is invalid after a predetermined number of retries. If that is the message then that response is saved as indicated by block 727. Otherwise block 729 tests to see if the message is one where the secondary controller 400 wants to be a primary workstation controller.

Assuming that the messages were either of the type tested for by blocks 726, 728 and 720 which was described above, then the messages are saved as indicated by block 727, and then processor 20 sends a message via the communications controller 60 and communications controller 600 to CPU 200 asking CPU 200 to determine if the secondary workstation controller 400 is functioning properly. This is indicated by block 730. CPU 20 then sets a programmable timer as indicated by block 731 and then goes to a wait state for this function. The CPU 20 comes out of the wait state for this function when either CPU 200 sends a message via the communications controllers 600 and 60 to CPU 20 or when the timer expires.

If CPU 200 sends a message to CPU 20 prior to expiration of the timer then CPU 20 resets the timer as indicated by block 735, and the type of message is then tested as indicated by block 736. If CPU 200 sends a message indicating that the workstation controller 400 is okay, then CPU 20 sends a message to the systems operator of CPU 20 to the effect that everything was okay, and thus the problem must be elsewhere. The systems operator for CPU 20 would then have to determine the problem, and the function being performed by CPU 20 for workstation controller 40 would terminate.

If CPU 200 sends a message to CPU 20 indicating that the workstation controller 400 is not okay then CPU 20 sends a message to the systems operator where the message consists of the saved response, i.e. the messages tested for by blocks 726, 728 or 720 and the message sent by CPU 200 via the communications controllers 600 and 60 that the secondary workstation 400 is okay. If block 736 determines that the message from CPU 200 was to the effect that the workstation controller 400 was not okay then CPU 20 sends a message to the systems operator where the message consists of the saved response and the message from the CPU 200 to the effect that the workstation controller 400 was not okay. In either case CPU 20 then terminates the function it has been performing.

If the timer had expired prior to CPU 200 sending a message to CPU 20 via the communications controllers 600 and 60, then CPU 20 sends a message to the systems operator which includes the saved response indicated by block 727 and a message to the effect that CPU 200 did not respond via communications controllers 600 and 60 to CPU 20 within the time limit set by the timer as indicated by block 739. This could be caused by either the CPU 200 not functioning or not functioning properly, or there is some fault with the auxiliary communications link which includes the communications controllers 600 and 60. In any event the processor 20 terminates the function that it had been performing after it sends the message to the systems operator.

If the message received by CPU 20 were of the type tested for by block 729 then CPU 20 would notify the control program operating in CPU 20 that workstation controller 40 will become a secondary workstation controller, and thus CPU 20 should switch states as indicated by block 750. CPU 20 then sends a message notifying the system operator that it is switching to the secondary state for this function. This is indicated by block 751. CPU 20 sets the function to the secondary state.

If the message received by CPU 20 from the workstation controller 40 were the type tested by block 718, Figure 10d, i.e. that the secondary workstation controller 400 is not responding to polls, then CPU 20 sets a programmable timer as indicated by block 760, Figure 10d, and goes to a wait state indicated by block 761. The function is taken out of the wait state when either the timer expires as indicated by block 762 or if CPU 20 receives the message from the workstation controller 40 before the time expires. If the timer expires as indicated by block 762 then CPU 20 sends a message via communications controllers 60 and 600 to CPU 200 asking that it determines if workstation controller 400 is okay as indicated by block 764, Figure 10e. If CPU 20 receives a message from the workstation controller 40 prior to the timer expiring as indicated by block 763, Figure 10d, then it tests for the type of message as indicated by block 765. If the message is of the type indicating that the secondary workstation controller 400 has started responding polls and particularly with a response of power on transition, then CPU 20 switches to the operation indicated by block 717. Otherwise CPU 20 notifies the system operator with a message indicating that the workstation controller 40 is not operating properly as indicated by block 766, and the function ends.

When the timer expires prior to a message from the primary workstation controller 40 and CPU 20 sends CPU 200 a message requesting CPU 200 to check the condition of workstation controller 400, then CPU 20 sets a timer as indicated by block 770, Figure 10e, and goes to a wait state for this function as indicated by block 771. CPU 20 then comes out of this wait state for this function by either receiving a message from the secondary CPU 200 as indicated by block 772 or by the timer expiring as indicated by block 773. If a message is received from the secondary CPU 200 then CPU 20 resets the timer and makes a test for the type of message received from CPU 200 as indicated by block 776. If the message sent by CPU 200 indicates that the secondary workstation controller 400 is okay, then CPU 20 notifies the system operator that it did not receive a message from the workstation controller 40 but that the auxiliary communications link, i.e. the link via communications controllers 60 and 600 is okay as indicated by block 777, and the function then ends.

If the message sent by the secondary CPU 200 indicates that the secondary workstation controller 400 is not okay, then CPU 20 notifies the system operator that there was no response from the workstation controller 40 and that the auxiliary communications link was not okay as indicated by block 778, and then the function ends.

If the timer expires as indicated by block 773 then CPU 20 notifies the system operator that there was no message from the workstation controller 40 prior to the timer expiring and that the auxiliary communications link was not operable. This is indicated by block 779, and then the CPU 20 ends the function.

If the message detected by block 719, Figure 10e, indicates that the secondary workstation controller 400 is keeping port 45 busy then CPU 20 sends a message to CPU 200 via the communications controllers 60 and 600 requesting CPU 200 to stop the secondary workstation controller 400 as indicated by block 780. CPU 20 then sets a programmable timer as indicated by block 781 and goes to a wait state, block 782. CPU 20 is taken out of the wait state for this function by either receiving a message from the secondary CPU 200, block 783, or the timer expires, block 784. If CPU 20 receives a message from secondary CPU 200 then the timer is reset, block 785, and a test is made by block 786 for the type of response from CPU 200. If the message sent by CPU 200 indicates that the secondary workstation controller 400 is okay, CPU 20 sends a message to the systems operator which indicates that the secondary workstation controller 400 continues to send and that the auxiliary communications link is okay. If the message sent by CPU 200 indicates that the secondary workstation controller is not okay, then CPU 20 sends a message to the systems operator which indicates that the secondary workstation controller 400 continues to send and that the secondary computer 200 has sent a message via the auxiliary communications link that the secondary workstation controller is not okay, block 788. CPU 20 then terminates the function.

If the timer expires, block 784, prior to CPU 200 sending a message, then CPU 20 sends a message to the system operator indicating that the secondary workstation controller 400 continues to send and the secondary CPU 200 does not respond on the auxiliary communications link, block 789. CPU 20 then terminates the function.

As previously mentioned the wait state indicated by block 810, Figure 10c, of the secondary state is entered from either block 712, Figure 10b, or from block 752, Figure 10d. It is entered from block 712 when CPU 200 is initially set as the secondary host CPU, and it is entered from block 752 when the secondary workstation controller 400 is being switched to function as the primary workstation controller. The CPU operating in the secondary state, i.e. secondary host CPU 200, is taken out of the wait state for this function when there is a response from the secondary workstation controller 400 as indicated by block 815. Block 816 checks the type of response from the secondary workstation controller 400. If the response is one indicating that the primary workstation controller 40 has started polling, then the secondary host computer 200 goes to a wait state for this function. If the response indicates that the primary workstation controller 40 did not start polling then secondary host CPU 200 sends a message via the communication controllers 600 and 60 to the primary host CPU 20 as indicated by block 825.

When the secondary host CPU 200 goes to the wait state indicated by block 817 it normally remains in this wait state for this function but comes out of the wait state when there is a message from the secondary workstation controller 400. There is only one valid message under this condition from the secondary workstation controller 400. That valid message is an indication that the primary workstation controller 40 has stopped polling. Block 821 checks for the type of message from the secondary workstation controller 400. If the message is valid, i.e. it indicates that the primary workstation controller 40 has stopped polling, then the secondary host CPU 200 sends a message to the primary host CPU 20 via the communications controllers 600 and 60 as indicated by block 825. If there is a message from the secondary workstation controller 400 other than one that indicates that the primary workstation controller 40 has stopped polling, then CPU 200 notifies the system operator that the secondary workstation controller 400 is not operable, and the operation ends for this function.

After CPU 200 has sent the message to CPU 20 indicating that the primary workstation controller 40 has stopped polling, CPU 200 sets a programmable timer and goes to a wait state as indicated by blocks 826 and 827 respectively.

CPU 200 comes out of the wait state for this function if there is a message from the secondary workstation controller 400, block 831, Figure 10f, a message received from CPU 20 via communications controllers 60 and 600, block 832, or if the timer set by CPU 200 expires, block 833. If there is a message from the workstation controller 400 prior to the timer expiring, then the timer is reset, block 835, and a test is made to determine the type of message from the secondary workstation controller 400. If the message is one indicating that the primary workstation controller 40 has started polling, then the operation switches back to block 815. Otherwise the system operator is notified by CPU 200 that the secondary workstation controller 400 is not operable as indicated by block 822, Figure 10c, and the function ends. If CPU 200 receives a message from CPU 20 then it resets the timer block 840, Figure 10f, and the type of message is determined, block 841, by CPU 200. If the message received from CPU 20 indicates that the primary workstation controller 40 is okay, then the operation switches back to block 810, Figure 10c, i.e. CPU 200 goes into a wait state for this function. If the message is one indicating that the primary workstation controller 40 is not okay, then CPU 200 sets itself for this function to the primary state, block 845, and notifies the system operator that CPU 200 is now operating as the primary host CPU for this function as indicated by block 846.

If the timer expires as indicated by block 833 prior to a message from either the secondary workstation controller 400 or a message from CPU 20 via the communication controllers 60 and 600, then CPU 200 sets itself to the primary state for this function as indicated by block 845, and the system operator as previously indicated is notified that CPU 200 is now operating as the primary host for this function, block 846.

The computer systems 10 and 100 of Figure 1 are shown in greater detail in Figures 2a, 2b, 2c and 2d. In Figure 2a CPU 20 can be of the type shown and described in US-A-4,258,417 dated March 24, 1981 by Berglund et al for, "System For Interfacing Between Main Store Memory and a Central Processor", which includes a microprocessor 21 for processing control words received from control storage 22. Microprocessor 21 also can access main storage 15 via virtual address translator 23 and main storage control 24. CPU 20 interfaces with an I/O channel 26 which can be of the type shown and described in US-A-4,381,540 dated April 26, 1983 entitled, "Asynchronous Channel Error Mechanism" by Lewis et al.

The channel 26 interfaces with workstation controller 40 and communications controller 60 as shown in Figure 2b. I/O channel 26 also interfaces with a system control adapter 30 which is of the type shown and described in US-A-4,023,142 dated May 10, 1977 entitled, "Common Diagnostic Bus for Computer Systems to Enable Testing Concurrently with Normal System Operation" by R. J. Woessner.

The CPU 200 of the secondary computer system 100 is shown in Figure 2d and in this example it is identical to the primary, i.e. it has a microprocessor 210, a control storage 220, a virtual address translator 230 and a main storage control 240. The secondary CPU 200 interfaces with a channel 260 which in turn interfaces with the workstation controller 400 and the communications controller 600, Figure 2c. The channel 260 also interfaces with system control adapter 300.

In Figures 3a, 3b, 3c and 3d the primary host CPU 20 is shown in detail as in Figure 2a but in Figures 3a and 3b it is shown as functioning as a host to several workstation controllers 40 where one of the workstation controllers 40 is functioning as a primary workstation controller, and the other workstation controllers 40 are independent workstation controllers, not functioning as either primary or secondary workstation controllers. Similarly in Figure 3d the secondary host CPU 200 is shown in detail as in Figure 2d, and it is connected to a plurality of workstation controllers 400 where one of the workstation controllers 400 is a secondary workstation controller, and the other workstation controllers 400, Figure 3c, are functioning as independent workstation controllers.

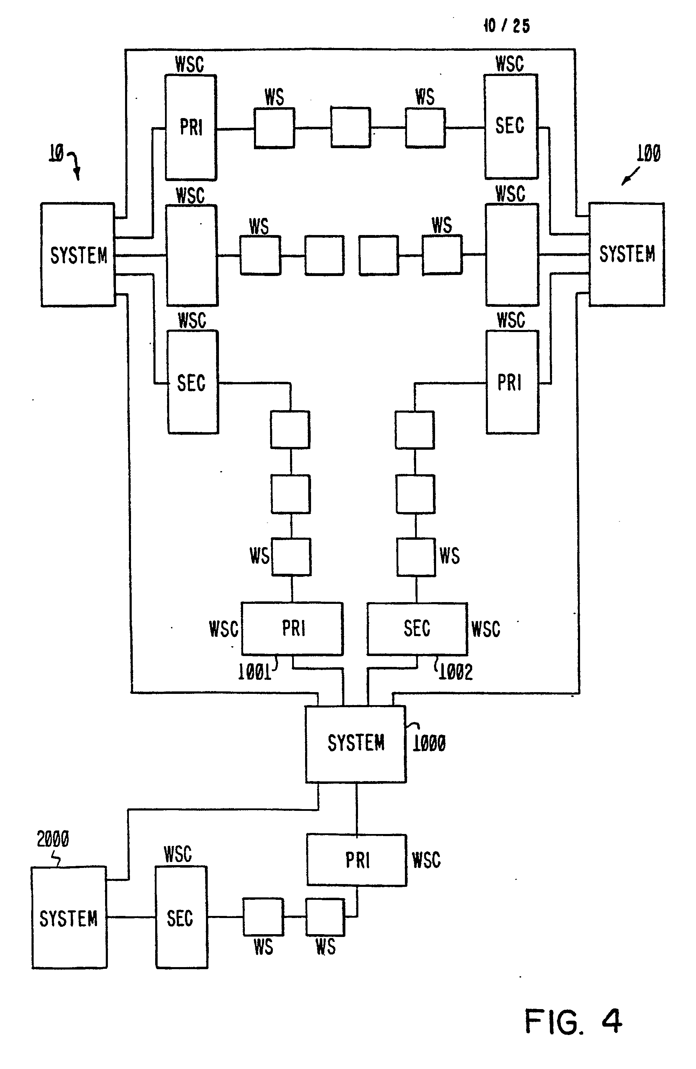

In Figure 4 the computer systems 10 and 100 function as shown in Figure 1 but also computer system 10 functions as a secondary host system, and computer system 100 functions as a primary host system with respect to computer system 1,000 which controls both primary workstation controller 1,001 and secondary workstation controller 1,002. Computer system 1,000 also functions as a primary host computer system with respect to secondary host computer system 2,000.

The workstation controllers 40 and 400 as previously mentioned can be identical and are shown in detail in Figures 5a, 5b and 5c. Data from the host CPU via the channel is entered into the channel out register 41 of the workstation controller and is transferred therefrom to the channel buffer 42. This data could be I/O device commands, for example. Microcode in control store 43, Figure 5c, moves the command from the channel buffer 42 to data storage 44, Figure 5b. The microinstructions then decode the command. These microinstructions are moved from control storage 43 into the register 45 for execution.

After the command is decoded control information and data from the command is passed from data storage 44, Figure 5b, to the registers 46, Figure 5c. The two second and two minute timers as well as the retry counter and poll list are contained in random access storage 47.

The workstations 50 attach to the workstation controller via a workstation cable 51 which is attached to the driver/receiver 49 of the workstation controller, Figure 5c. The driver/receiver attaches to a serializer/deserializer (serdes) 48 of the workstation controller, Figure 5c. The serdes 48 is shown in greater detail in Figure 6a. It functions in a conventional manner of a serializer and deserializer of data. The cable address register 52, Figure 6a, contains information for specifying the line and workstation address of the workstations connected to the lines forming the cable 51. Each line connected to a driver receiver card 49 of Figure 6b is addressable as well as the workstations connected to the line, and in this example a maximum of seven workstations can be connected to each line.

The workstations 50 adjacent to the workstation controllers 40 and 400 are connected with the outconnector connected to the workstation controllers whereby on removal of an inoperable workstation controller the line will be properly terminated. The in and out connectors are shown in Figure 7. Switch 70 when in the position shown is in the cable through position and can be operated to connect with line terminating resistor 71.

From the foregoing it is seen that the present invention has a minimal number of single elements in the data path that are subject to failure. One of the workstation controllers, i.e. the standby workstation controller, appears as a workstation to the operating workstation controller. When there is a problem with the host system for the operating workstation controller or if there is a problem with the operating workstation controller itself, then the standby workstation controller takes over and controls the workstations so as to provide continuous operation. The secondary or standby host processor using a communications path determines when the primary host processor is not operating properly for the primary workstation controller. The secondary host processor then through the secondary workstation controller communicates this back to the primary or operating workstation controller requesting that it switch to the secondary or standby state, and the standby workstation controller takes over as the operating workstation controller.

## Claims

1. A computer system having a primary host computer (10), a secondary host computer (100), a primary workstation controller (40), a secondary workstation controller (400), a plurality of workstations (50) where the primary and secondary workstation controllers are connected and associated to the primary and secondary host computers respectively and operable in a standby mode and in a control mode in response to commands from said primary and secondary host computers respectively,

   characterized in that:
   - said primary and secondary workstation controllers (40, 400) are connected to said plurality of workstations (50) and to each other so as to poll said plurality of workstations and each other, wherein
a) operation in the standby mode includes:
- responding to polls issued from the workstation controller in the control mode,
- generating a mode switch request message upon failure of being polled within a predetermined period of time and issuing said mode switch request message to the workstation controller in the control mode, and wherein
b) operation in the control mode includes
- polling said plurality of workstations and the workstation controller in the standby mode and
- switching to the standby mode upon receipt of the said mode switch request message.

2. The computer system of claim 1 further comprising an auxiliary communication link (60, 600) connected between said primary and secondary host computers (10, 100) enabling each to determine if the other is operational to control the connected workstation controller (40, 400).

3. The computer system of claim 2 where said auxiliary communication link (60, 600) is used by the primary and secondary host computers (10, 100) to determine which one will command the connected workstation controller (40, 400) to be in the control mode and which one will command the connected workstation controller (40, 400) to be in the standby mode.

4. The computer system of claim 2 or 3 where the host computer (10, 100) commanding the associated connected workstation controller (40, 400) to be in the standby mode is responsive to a mode switch message from said workstation controller (40, 400) in the standby mode to command that workstation controller (40, 400) to switch from the standby to the control mode, when the other host computer (10, 100) has been determined via the auxiliary communication link (60, 600) not to be operational to control its associated connected workstation controller to be in the control mode.

5. The computer system of claim 3 where the host computer (10, 100), which commanded its associated connected workstation controller (40, 400) to be in the standby mode, upon determining via the auxiliary communication link (60, 600) that the other host computer (10, 100) is non operational to control its associated connected workstation controller (40, 400), commands its associated connected workstation controller (40, 400) in the standby mode to switch to the control mode.

6. The computer system of claim 5 where the said workstation controller (40, 400) upon switching from the standby mode into the control mode sends a mode switch message to the other workstation controller (400, 40) which upon receiving the said mode switch message switches to the standby mode.

7. The computer system of any preceding claim where said primary and secondary workstation controllers (40, 400) each have line impedance matching resistors (71) connected to function as a driver resistor when the workstation controller (40, 400) is operating in the control mode and to function as a line terminating resistor when the workstation controller (40, 400) is operating in the standby mode.

8. The computer system of any preceding claim where said workstations (50) are serially connected.

9. The computer system of claim 8 where said primary and secondary workstation controllers (40, 400) are connected to opposite ends of said serially connected workstations (50).

**Revendications**

1. Système informatique comportant un ordinateur central primaire (10), un ordinateur central secondaire (100), un contrôleur primaire (40) de postes de travail, un contrôleur secondaire (400) du poste de travail, une pluralité de postes de travail (50) dans lesquels les contrôleurs primaire et secondaire des postes de travail sont raccordés et associés respectivement aux ordinateurs centraux primaire et secondaire et peuvent fonctionner dans un mode d'attente et dans un mode de commande en réponse à des ordres délivrés respectivement par lesdits ordinateurs centraux primaire et secondaire,
caractérisé en ce que :
lesdits contrôleurs primaire et secondaires (40, 400) des postes de travail sont raccordés à ladite pluralité de postes de travail (50) et entre eux de manière à interroger ladite pluralité de postes de travail et à s'interroger réciproquement,
a) le fonctionnement dans le mode d'attente incluant :

- la réponse à des appels délivrés par le contrôleur de postes de travail dans le mode de commande,
- la production d'un message de demande de commutation de mode en cas de l'absence d'appels pendant l'intervalle de temps prédéterminé et l'envoi dudit message de demande de commutation de mode au contrôleur du poste de travail fonctionnant dans le mode de commande, et

b) le fonctionnement dans le mode de commande incluant :

- l'appel de ladite pluralité du poste de travail et du contrôleur de postes de travail dans le mode d'attente, et
- la commutation sur le mode d'attente lors de la réception dudit message de demande de commutation de mode.

2. Système informatique selon la revendication 1, comportant en outre une liaison auxiliaire de communication (60,600) branchée entre lesdits ordinateurs centraux primaire et secondaire (10,100) et permettant à chacun de ces ordinateurs de déterminer si l'autre agit de manière à commander le contrôleur raccordé (40,400) de postes de travail.

3. Système informatique selon la revendication 2, dans lequel ladite liaison auxiliaire de communication (60,600) est utilisée par les ordinateurs centraux primaire et secondaire (10,100) pour déterminer lequel place d'une manière commandée le contrôleur raccordé (40,400) de postes de travail dans le mode de commande et lequel place, d'une manière commandée, le contrôleur raccordé (40,400) de postes de travail dans le mode d'attente.

4. Système informatique selon la revendication 2 ou 3, dans lequel l'ordinateur central (10,100), qui commande le contrôleur raccordé associé (40,400) de postes de travail pour qu'il fonctionne dans le mode d'attente est sensible à un message de commutation de mode émanant dudit contrôleur (40,400) de postes de travail fonctionnant dans le mode d'attente pour commander ce contrôleur (40,400) de manière qu'il soit commuté du mode d'attente au mode de commande lorsque, au moyen de la liaison auxiliaire de communication (60,600), il a été établi que l'autre ordinateur central (10,100) n'est pas opérationnel pour placer, d'une manière commandée, le contrôleur raccordé de postes de travail, qui lui est associé, dans le mode de commande.

5. Système informatique selon la revendication 3, dans lequel l'ordinateur central (10,100), qui a commandé le contrôleur raccordé (40,400) de postes de travail, qui lui est associé, pour qu'il fonctionne dans le mode d'attente, commande le contrôleur raccordé (40,400) de postes de travail, qui lui est associé, dans le mode d'attente en vue de sa commutation sur le mode de commande, lorsque, par l'intermédiaire de la liaison auxiliaire de communication (60,600), il a été établi que l'autre ordinateur central (10,100) n'est pas opérationnel pour commander le contrôleur raccordé (40,400) de postes de travail, qui lui est associé.

6. Système informatique selon la revendication 5, dans lequel lors de la commutation dudit contrôleur (40, 400) de postes de travail depuis le mode d'attente dans le mode de commande, ce contrôleur envoie un message de commutation de mode à l'autre contrôleur (400,40) de postes de travail, qui est commuté sur le mode d'attente, lors de la réception dudit message de commutation de mode.

7. Système informatique selon l'une quelconque des revendications précédentes, dans lequel lesdits contrôleurs primaire et secondaire (40,400) des postes de travail possèdent respectivement des résistances (71) d'adaptation d'impédances de lignes, qui sont raccordées de manière à fonctionner en tant que résistances de commande lorsque le contrôleur (40,400) de postes de travail fonctionne dans le mode de commande, et pour fonctionner en tant que résistance de terminaison de ligne, lorsque le contrôleur (40,400) de postes de travail fonctionne dans le mode d'attente.

8. Système informatique selon l'une quelconque des revendications précédentes, dans lequel lesdits postes de travail (50) sont raccordés en série.

9. Système informatique selon la revendication 8, dans lequel lesdits contrôleurs primaire et secondaire (40,400) des postes de travail sont raccordés à des extrémités opposées desdits postes de travail (50) raccordés en série.

## Ansprüche

1. Rechnersystem mit einem primären Wirtsrechner (10), einem sekundären Wirtsrechner (100), einer primären Arbeitsstationssteuerung (40), einer sekundären Arbeitsstationssteuerung (400), einer Mehrzahl von Arbeitsstationen (50), wo die primären und sekundären Arbeitsstationssteuerungen verbunden und den primären bzw. sekundären Wirtsrechnern zugeordnet sind und in einem Bereitschaftsmodus und in einem Steuermodus entsprechend Befehlen von den primären bzw. sekundären Wirtsrechnern betrieben werden können, dadurch gekennzeichnet, daß die primären und sekundären Arbeitsstationssteuerungen (40, 400) mit der Mehrzahl von Arbeitsstationen (50) und miteinander verbunden sind, um die Mehrzahl von Arbeitsstationen und einander aufzurufen, wobei

a) ein Betrieb in dem Bereitschaftsmodus umfaßt:

Antworten auf Aufrufe, die von der Arbeitsstationssteuerung in dem Steuermodus ausgesendet werden, Erzeugen einer Modusumschaltungsforderung-Nachricht nach dem Ausbleiben, innerhalb einer vorbestimmten Zeitdauer aufgerufen zu werden, und Aussenden einer Modusumschaltungsforderung-Nachricht an die Arbeitsstationssteuerung in dem Steuermodus und wobei

b) ein Betrieb in dem Steuermodus umfaßt:

Aufrufen der Mehrzahl von Arbeitsstationen und der Arbeitsstationssteuerung in dem Bereitschaftsmodus und

Umschalten auf den Bereitschaftsmodus nach dem Empfang der Modusumschaltungsforderung-Nachricht.

2. Rechnersystem nach Anspruch 1, das ferner eine Hilfsnachrichtenverbindung (60, 600) aufweist, die zwischen die primären und sekundären Wirtsrechner (10, 100) geschaltet ist, wodurch jeder bestimmen kann, ob der andere betriebsbereits ist, um die angeschlossene Arbeitsstationssteuerung (40, 400) zu steuern.

3. Rechnersystem nach Anspruch 2, bei welchem die Hilfsnachrichtenverbindung (60, 600) von den primären und sekundären Wirtsrechnern (10, 100) verwendet wird, um zu bestimmen, welcher die angeschlossene Arbeitsstationssteuerung (40, 400) steuern wird, damit sie sich in dem Steuermodus befindet und welcher die angeschlossene Arbeitsstationssteuerung (40, 400) steuern wird, damit sie sich in dem Bereitschaftsmodus befindet.

4. Rechnersystem nach Anspruch 2 oder 3, bei welchem der Wirtsrechner (10, 100), welcher die zugeordnete, verbundene Arbeitsstationssteuerung (40, 400) steuert, damit sie sich in dem Bereitschaftsmodus befindet, auf eine Modusumschaltung-Nachricht von der Arbeitsstationssteuerung (40, 400) in dem Bereitschaftsmodus zum Steuern jener Arbeitsstationssteuerung (40, 400) anspricht, um von dem Bereitschafts- auf den Steuermodus umzuschalten, wenn für den anderen Wirtsrechner (10, 100) über die Hilfsnachrichtenverbindung (60, 600) bestimmt wurde, daß er nicht betriebsbereit ist, seine zugeordnete, verbundene Arbeitsstationssteuerung so zu steuern, daß sie sich in dem Steuermodus befindet.

5. Rechnersystem nach Anspruch 3, bei welchem der Wirtsrechner (10, 100), der seine zugeordnete verbundene Arbeitsstationssteuerung (40, 400) so gesteuert hat, daß sie sich in dem Bereitschaftsmodus befindet, nach Bestimmen über die Hilfsnachrichtenverbindung (60, 600), daß der andere Wirtsrechner (10, 100) nicht betriebsbereit ist, um seine zugeordnete verbundene Arbeitsstationssteuerung (40, 400) zu steuern, seine zugeordnete verbundene Arbeitsstationssteuerung (40, 400) in dem Bereitschaftsmodus zum Umschalten auf den Steuermodus steuert.

6. Rechnersystem nach Anspruch 5, bei welchem die Arbeitsstationssteuerung (40, 400) nach Umschalten von dem Bereitschaftsmodus auf den Steuermodus eine Modusumschaltung-Nachricht an die andere Arbeitsstationssteuerung (400, 40) sendet, die nach Empfangen der Modusumschaltung-Nachricht auf den Bereitschaftsmodus umschaltet.

7. Rechnersystem nach irgend einem vorgehenden Anspruch, bei welchem jede der primären und sekundären Arbeitsstationssteuerungen (40, 400) Leitungsimpedanz-Anpassungswiderstände (71) besitzt, die wie ein Treiberwiderstand funktionieren, wenn die Arbeitsstationssteuerung (40, 400) in dem Steuermodus arbeitet und wie ein Leitungsabschlußwiderstand funktionieren, wenn die Arbeitsstationssteuerung (40, 400) in dem Bereitschaftsmodus arbeitet.

8. Rechnersystem nach irgend einem vorgehenden Anspruch, bei welchem die Arbeitsstationen (50) in Reihe geschaltet sind.

9. Rechnersystem nach Anspruch 8, bei welchem die primären und sekundären Arbeitstationssteuerungen (40, 400) mit gegenüberliegenden Enden der in Reihe geschalteten Arbeitstationen (50) verbunden sind.

# FIG. I

FIG. 2a

| FIG. 2a | FIG. 2b | FIG. 2c | FIG. 2d |

FIG. 2

# FIG. 2b

FIG. 2c

FIG. 2d

FIG. 3a

| FIG. 3a | FIG. 3b | FIG. 3c | FIG. 3d |
|---------|---------|---------|---------|
|         |         |         |         |

FIG. 3

# FIG. 3b

FIG. 3c

FIG. 3d

FIG. 4

| FIG. 5a | FIG. 5b | FIG. 5c |
|---------|---------|---------|
|         |         |         |

## FIG. 5

DBI BUS

CHANNEL IN REGISTER

CCB
I/O RAR
DATA 0
DATA 1
DATA 2
DATA 3
DATA 4
DATA 5
DATA 6
DATA 7

TO/FROM CHANNEL

CHANNEL BUFFER

42

A-REGISTER

B-REGISTER

PC    PC

ALU

PG

CHANNEL OUT REGISTER

PC

41

## FIG. 5a

FIG. 5b

FIG. 5c

DBI/CSD BUS

DBI/CSD BUS

DBO BUS

CSA BUS

PAGE CONTROL REGISTER

TIMER REGISTER

ABO BUS

ABO BUS

CABLE ADDRESS REGISTER

52

STATUS REGISTER

CSA BUS

DBO BUS

SERDES RECEIVE BUFFER REGISTER

48

SERDES REGISTER

X-DATA

SERDES CONTROL

LINK CONTROL

R-DATA

DBO BUS

FIG. 6a

FIG. 6b

FIG. 7

FIG. 8a

```
        ┌──────────┐
        │ PRIMARY  │
        └────┬─────┘
   ┌─────────────────┐
   │ MONITOR         │
   │ PRIMARY PORT    │~501
   │ FOR ACTIVITY    │
   └────────┬────────┘
            │ ~502
        ╱╲  YES ──────────────┐
      ╱ ACTIVITY ╲            │
      ╲          ╱   ┌──────────────────────┐
        ╲╱              │ RESPOND TO POLL WITH │~503
         │ NO           │ I WANT TO BE PRIMARY │
   ┌──────────┐         └──────────┬───────────┘
   │ POLL     │~508                │ ~504
   │SECONDARY │               ╱╲  NO ───────────┐
   └────┬─────┘             ╱ ACTIVITY ╲         │
        │ ~509     (A)      ╲  STOP    ╱         │
     ╱╲  NO                   ╲╱              ┌─────────┐
   ╱ ANY ╲                     │ YES         │ REPORT  │~505
   ╲RESPONSE╱              ┌──────────────┐  │ ERROR   │
     ╲╱  YES  │POLL SECONDARY│~510       │ COND    │
      │         └──────────────┘         └────┬────┘
```

REPORT TO HOST  530

POLL SECONDARY 508 / 510

INCREMENT RETRY COUNTER  512

REMOVE PORT FROM POLL LIST  506

INVALID RESPONSE 511

OVERFLOW  513

REPORT TO HOST  514

NO RESPONSE  515

INCREMENT RETRY CNTR  516

STOP POLLING SECONDARY AND REMOVE FROM POLL LIST

RESET RETRY COUNTER  536

POLL SEC  532

OVERFLOW  517

SET UP FOR RETURN TO A  519

REPORT TO HOST  537

ANY RESPONSE  533

REPORT TO HOST  518

SET UP TO RETURN TO B  538

POT  534

SET UP TO RETURN TO C  531

DO OTHER WORK AND WAIT FOR INTERRUPT TO DO NEXT POLL CYCLE  507

↓A   ↓B   ↓C   ↓OTHER WORK

29

# FIG. 8b

B

POLL SECONDARY ~540

541 RESPONSE

SECONDARY OK → RESET RETRY COUNTER ~542

ERROR/POT
NO RESPONSE
SEC WANTS TO BE PRI

SET UP TO RETURN TO B ~543

SECONDARY WANTS TO BE PRIMARY

YES → REPORT TO HOST ~545

544

SECONDARY ~546

INCREMENT RETRY COUNTER ~550

551 OVERFLOW

YES

552 ERROR OR NO RESPONSE

NO NO RESPONSE

ERROR/POT

555

REPORT TO HOST ~553

REPORT TO HOST

PREPARE TO RETURN TO A ~554

STOP POLLING SECONDARY & REMOVE FROM POLL LIST

556

DO OTHER WORK AND WAIT FOR INTERRUPT TO DO NEXT POLL CYCLE ~507

↓A        ↓B        ↓C        ↓OTHER WORK

FIG. 9

| | | |
|---|---|---|
| FIG. 10a | FIG. 10b | FIG. 10c |
| FIG. 10d | FIG. 10e | FIG. 10f |

## FIG. 10

## FIG. 10a

713 ~ GO TO NORMAL PROC FOR ALL WORK STATIONS

714 ~ GO TO WAIT STATE FOR SECONDARY ADDRESS

715 ~ RECEIVE MSG FROM WSC

716 — MSG — YES / NO

32

# FIG. 10b

```
                                    ┌──────────────┐
                                    │SEND MSG ON   │╲780
                                    │AUX  LINK  TO │
                                    │STOP SEC WSC  │
                                    └──────┬───────┘
   ┌──────────────┐ 710                    │
   │LOAD  POLL    │╱                 ┌──────┴───────┐
   │LIST COMMAND  │                  │ SET  TIMER   │╲781
   └──────┬───────┘                  └──────┬───────┘
          │                                 │
   ┌──────┴───────┐ 711              ┌──────┴───────┐
   │SET MACHINE   │╱                 │   GO  TO     │╲782
   │   STATE      │                  │ WAIT STATE   │
   └──────┬───────┘                  └──────┬───────┘
  PRIMARY │                                 │
        ╱─┴─╲  712             783 ╲   ┌─────┴─────┐     784
       ╱STATE SET╲              ┌──┴──┐│           │   ╱
◄─────╱    ?     ╲          ┌───┴────┐│       ┌────┴────┐
       ╲         ╱          │MSG FROM│       │ TIMER   │
        ╲─┬─────╱           │SEC CPU │       │EXPIRES  │
          │ SECONDARY       └───┬────┘       └────┬────┘
                                │              789 │
                       785 ╲ ┌──┴──────┐          ╱
                          ┌─┴─────────┐│   ┌──────┴────────────┐
                          │RESET TIMER││   │SEND  MSG  TO SYS  │
                          └────┬──────┘    │OPERATOR SEC WSC   │
                               │      786   │CONTINUES  TO SEND │
                             ╱─┴─╲  ╱       │AND SEC CPU DOES NOT│
              NOT OK       ╱ RESP ╲         │RESPOND ON AUX LINK│
        ┌───────────────╱FROM SEC ╲        └─────────┬─────────┘
        │                ╲         ╱                 │
  788 ╲ │                 ╲─┬─────╱             ┌─────┴─────┐
   ┌───┴──────────────┐ 787╲  │ OK              │    END    │
   │SEND  MSG  TO SYS │  ┌───┴──────────────┐   └───────────┘
   │OPERATOR SEC WSC  │  │SEND  MSG TO SYS  │
   │CONTINUES  TO SEND│  │OPERATOR SEC WSC  │
   │& SEC CPU RESPONDS│  │CONTINUES  TO SEND│
   │NOT OK ON AUX LINK│  │& SEC CPU RESPONDS│
   └────────┬─────────┘  │OK ON AUX LINK    │
            │            └────────┬─────────┘
      ┌─────┴─────┐               │
      │    END    │
      └───────────┘
```

# FIG. 10c

810

GO TO
WAIT STATE

815

RESPONSE
FROM SEC WSC

816

RESPONSE

PRIMARY WSC
DIDN'T START

PRIMARY WSC
STARTED POLLING

# FIG. 10d

718 MSG — NO

760 YES
SET TIMER

761 GO TO WAIT STATE

717 GO TO WAIT STATE

725 RECEIVE MSG FROM WSC

763 MSG FROM PRI WSC

726 RESP — YES

RESET TIMER

727 SAVE RESP

728 RESP — YES

730 SEND MSG ON AUX LINK ARE YOU OK?

729 RESP — NO

765 MSG — YES

731 SET TIMER

750 NOTIFY CNTL PROGRAM NOW SEC

766 NOTIFY SYSTEM OPERATOR INVALID WSC OPERATIONS

732 GO TO WAIT STATE

751 NOTIFY SYS OPERATOR NOW SEC

END

734 TIMER EXPIRES

733 MSG FROM SEC CPU

739 SEND MSG TO SYS OPERATOR MSG SAVED ABOVE AND AUX LINK NOT RESPONDING

735 RESET TIMER

752 SET STATE TO SEC

736 MSG FROM SEC CPU — NOT OK

END

737 SEND MSG TO SYS OPERATOR MSG SAVED ABOVE AND SEC CPU INDICATES SEC WSC OK

738 SEND MSG TO SYS OPERATOR MSG SAVED ABOVE AND SEC CPU INDICATES SEC WSC NOT OK

OK

END

END

# FIG. 10e

817 ~ GO TO WAIT STATE

820 ~ MSG FROM SEC WSC

821 POLLING STOPPED

NO → 822 NOTIFY SYSTEM OPERATOR SECONDARY WSC NOT OPERABLE

END

YES

SEND MSG ON AUX COMM ~ 825

SET TIMER ~ 826

GO TO WAIT STATE ~ 827

831 ~ MSG FROM WSC

832 ~ MSG FROM AUX

833 ~ TIMER EXPIRES

835 ~ RESET TIMER

RESET TIMER ~ 840

836 PRI WSC STARTED POLLING

NO

YES

841 MSG FROM AUX

NOT OK

OK

REMAIN SEC

845 SET MACHINE STATE TO PRI

846 ~ NOTIFY SYS OPERATOR SYS NOW PRI

FIG. 10f